# EUROPEAN PATENT APPLICATION

(11) **EP 4 344 029 A1**
(43) Date of publication of application: **27.03.2024**
(21) Application number: 22197828.1
(22) Date of filing: 26.09.2022
(51) Int. Cl.: H02K 1/32, H02K 9/197

(54) **COOLING ARRANGEMENT FOR ROTOR OF ELECTRICAL MACHINE**

(71) Applicant: Rolls-Royce Deutschland Ltd & Co KG, 15827 Blankenfelde-Mahlow (DE)
(72) Inventor: KIS, Gábor, 1143 Budapest (HU); KUTROVICH, Daniel, 1143 Budapest (HU); KOZÁR, Andras Farkas, 1143 Budapest (HU)

(57) **Abstract**

There is provided a cooling arrangement (100,200) for a rotor (102, 202) of an electrical machine (104, 204), the cooling arrangement comprises a hollow shaft (108, 208) having a first end (108A, 208A), a second end (108B, 208B) opposite to the first end, and an intermediate hollow body (108C, 208C) between the first end and the second end and a fluid guiding assembly (116, 216) arranged within the intermediate hollow body. Additionally, the cooling arrangement comprises the fluid guiding assembly having a central conduit (118, 218) fluidically coupled to the first end and spaced apart from the second end.

## Description

### TECHNICAL FIELD

The present disclosure relates generally to a cooling arrangement more specifically, the present disclosure relates to a cooling arrangement for a rotor of an electrical machine.

### BACKGROUND

For the past few decades, the use of electrical machines has increased widely for energy conversion mostly between electrical and mechanical energy. Conventionally, motors and generators are used for such conversion of energy. During the energy conversion, the electrical machines undergo losses which appear in the form of heat and thereby increasing the temperature of the electrical machine. In this regard, the heat is generated due to various reasons such as copper loss, iron loss and the like. The heat is radiated to surroundings by conduction and convection assisted by radiation from the outer surface of the electrical machines. Therefore, cooling is required to reduce heat generated by the components of the electrical machines. Typically, the cooling prevents the electrical machines from damaging components such as windings, commutator, brushes, and bushes.

Conventionally, the liquid and air-cooling methods are used for the cooling of the electrical machines. Notably, liquid cooling uses a liquid coolant such as a mixture of water and antifreeze solution to reduce the heat dissipated from the components of the electrical machines by continuously passing through the hose, to absorb the dissipated heat. Moreover, the air-cooling method has a fan that helps in reducing the temperature of the electrical machine by supplying air through the inlet.

However, the structure of the electrical machine is complex so installation of the cooling arrangement is complicated as there are many delicate electrical components. Moreover, the conventional cooling arrangement is supported only from one side within the electrical machine and thereby sensitive to bending stress when in use. Furthermore, seals used to seal the shaft to prevent the leakage of the coolants. However, during expansion of fluid coolant due to rise in temperature, seal is unable to completely prevent the leakage and leakage occurs inside the electrical machines and may lead to short circuit.

Therefore, in the light of the foregoing discussion, there exists a need to overcome the aforementioned drawbacks associated with conventional cooling arrangements for an electrical machine.

### SUMMARY

The present disclosure seeks to provide an improved cooling arrangement for a rotor of an electrical machine. The present disclosure seeks to provide a solution to the existing problem by providing a cooling arrangement for a rotor of an electrical machine that can be used to provide an efficient cooling solution with a high-power density and thereby improving heat management and consequently the load capability. An aim of the present disclosure is to provide a solution that overcomes, at least partially, the aforementioned problems encountered in prior art, and to provide cooling arrangement for an electrical machine which improves the heat management and is more efficient.

In a first aspect, the present disclosure provides a cooling arrangement for a rotor of an electrical machine, the cooling arrangement comprising:
- a hollow shaft having a first end, a second end opposite to the first end, and an intermediate hollow body between the first end and the second end; and
- a fluid guiding assembly arranged within the intermediate hollow body, the fluid guiding assembly having a central conduit fluidically coupled to the first end and spaced apart from the second end.

Optionally, the central conduit has an input end and an output end, and wherein the central conduit is configured to define an inlet path to allow a cooling medium to enter inside the hollow shaft.

Optionally, a space between the central conduit and the intermediate hollow body of the hollow shaft is configured to define an outlet path to allow the cooling medium to exit from the hollow shaft.

Optionally, the fluid guiding assembly further comprises at least one radial support unit arranged on the central conduit and supported by the intermediate hollow body of the hollow shaft. Optionally, the central conduit is fixed to the intermediate hollow body, in particular via the radial support unit. By being fixed together, the central conduit rotates together with the intermediate hollow body.

Optionally, the at least one radial support unit is operable to propel a cooling medium along an outlet path defined by a space between the central conduit and the intermediate hollow body of the hollow shaft.

Optionally, the at least one radial support unit comprises:
- a first radial support unit having a first plurality of blades, wherein the first radial support unit is arranged on the central conduit and in proximity to the first end; and
- a second radial support unit having a second plurality of blades, wherein the second radial support unit is arranged on the central conduit and in proximity to the second end.

Optionally, the at least one radial support unit comprises a plurality of first support rims surrounding the first plurality of blades and the second plurality of blades, the plurality of first support rims being mounted on the intermediate hollow body. Optionally, the at least one radial support unit comprises a plurality of radially extending protrusions, that are distributed circumferentially around the hollow shaft or around the flow guiding cover, and that connect the hollow shaft or the flow guiding cover to the hollow shaft, in particular to the intermediate hollow body. Optionally, the radially extending protrusions are circumferentially spaced from each other to allow for an axial flow of the cooling medium.

Optionally, the fluid guiding assembly further comprises a flow guiding cover enclosing the central conduit. Optionally, the intermediate hollow body comprises the flow guiding cover. Optionally, the flow guiding cover is a body that is rotationally symmetric with respect to the rotational axis of the hollow shaft. Optionally, the flow guiding cover can be hollow. A hollow flow guiding cover results in a lower weight of the cooling arrangement. Optionally, the flow guiding cover hermetically encloses a rotationally symmetric space. In other embodiments, the flow guiding cover is fixed, in particular integrally connected, to the central conduit. Optionally, the flow guiding cover is fixed to the radial support unit. By means of a flow guiding cover, the cross section of the intermediate hollow body guiding the cooling medium can be increased, increasing the flow velocity and/or reducing turbulences. Optionally, the at least one radial support unit is arranged on the flow guiding cover and supported by the intermediate hollow body of the hollow shaft.

Optionally, the flow guiding cover contains an inert gas therein.

Optionally, the flow guiding cover is configured to conform to a shape of the intermediate hollow body.

Optionally, the radial support unit comprises a circumferential rim, surrounding the flow guiding cover and mounted on the intermediate hollow body of the hollow shaft. Optionally, the circumferential rim is an integral part. Optionally, the circumferential rim is configured to connect the central conduit and/or the flow guiding cover to the intermediate hollow body.

Optionally, the radial support unit and/or the circumferential rim comprises one or more through openings configured to allow a cooling medium to flow therethrough and along an outlet path to exit the hollow shaft.

Optionally, the system further comprising an inlet member mounted on the first end of the hollow shaft and fluidically coupled to an input end of the central conduit.

Optionally, the first end of the hollow shaft is rotatably supported by a first bearing and the inlet member is arranged in the first bearing.

Optionally, the system further comprising a seal member mounted on the second end of the hollow shaft to seal the second end.

Optionally, the second end of the hollow shaft is rotatably supported by a second bearing.

Optionally, the intermediate hollow body comprises:
- a central tubular portion; and
- a first conical portion extending from the central tubular portion to the second end.

Optionally, the intermediate hollow body further comprises a second conical portion extending from the central tubular portion to the first end.

Embodiments of the present disclosure substantially eliminate or at least partially address the aforementioned problems in the prior-art, and provides a cooling solution in the electrical machine that can be used to provide an efficient cooling solution with high power density thereby improving heat management and consequently the load capability. Moreover, the fluid guiding assembly is supported on both ends by at least one radial support units arranged on the central conduit and provides support to the fluid guiding assembly. The bending stress is reduced by the at least radial support units and enhances the adaptability of the cooling system arrangement. The cooling system arrangement also comprise a seal member configured to minimise the leakage cooling medium and able to use with any cooling medium. Additionally, the cooling arrangement seek to be more energy efficient, environment-friendly safer working environment for the rotor. Furthermore, the cooling arrangement increases the lifespan of the electrical device by providing efficient heat management than the prior art.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 is a cross-sectional view of a cooling arrangement for a rotor of an electrical machine, in accordance with a first embodiment of the present disclosure; and
FIG. 2 is a cross-sectional view of a cooling arrangement for a rotor of an electrical machine, in accordance with a second embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

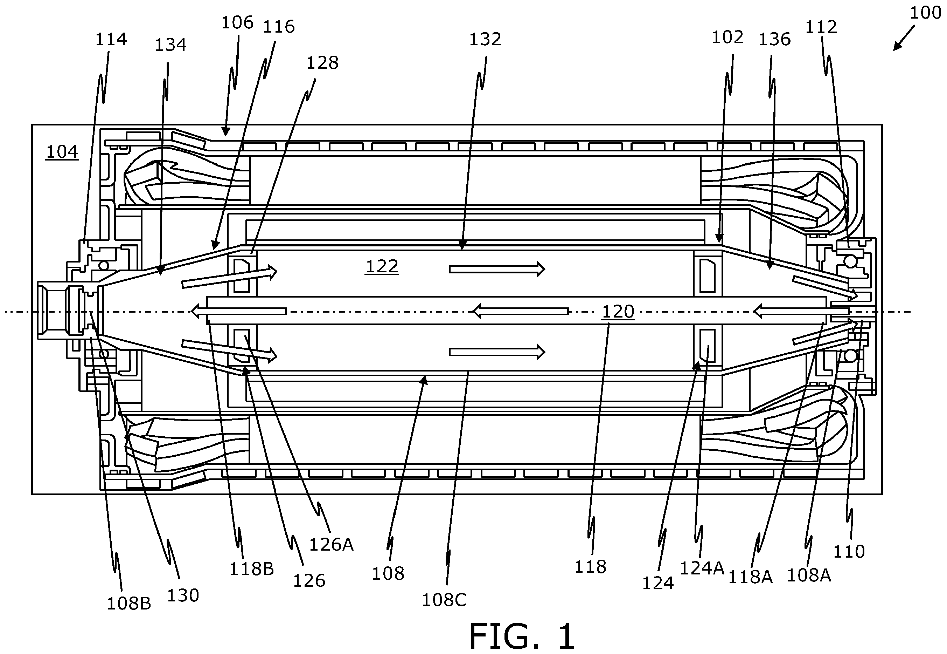

FIG. 1 is a cross-sectional view of a cooling arrangement **100** for a rotor **102** of an electrical machine **104,** in accordance with an embodiment of the present disclosure. As shown, the cooling arrangement **100** is configured to reduce the heat produced within the rotor **102.** Typically, the heat is produced due to frictional loss, copper loss, iron loss, and mechanical loss. The rotor **102** is arranged within a stator **106** and is configured to rotate within the stator **106** to create torque. The rotor **102** is formed in a rotationally symmetric shape and has a hollow shaft **108.** The hollow shaft **108** may be an elongate element having a first end **108A,** a second end **108B** opposite to the first end **108A,** and an intermediate hollow body **108C** between the first end **108A** and the second end **108B.** As shown, the first end **108A** and the second end **108B** is configured to support the hollow shaft **108** to provide rigidity to the cooling arrangement **100.** Optionally, the cooling arrangement **100** further comprises an inlet member **110** mounted on the first end **108A** of the hollow shaft **108.** The inlet member **110** is configured to transfer a cooling medium from the reservoir (not shown) to the rotor **102.** It will be appreciated that the inlet member **110** may have a circular cross-section. Optionally, the cross-section of the inlet member **108** may be of another shape, such as a rectangular, triangular or any polygonal shape.

Optionally, the first end **108A** of the hollow shaft **108** is rotatably supported by a first bearing **112.** and the inlet member **110** is arranged in the first bearing **112.** Optionally, the second end **108B** of the hollow shaft **108** is rotatably supported by a second bearing **114.** Moreover, the first bearing **112** and the second bearing **114,** are configured to facilitate motion and also support the rotation of the hollow shaft **108.** For instance, the first bearing **112** and the second bearing **114** may be a sliding bearing. In another instance, the first bearing **112** and the second bearing **114** may be a rolling bearing. Suitably, the first bearing **112** and the second bearing **114** may use fluid, balls or rollers to maintain the separation between bearing races. The bearing races are rings separated by the fluid, balls or rollers. Additionally, one race may be stationary and the other may be attached to the hollow shaft **108.** In this regard, the first bearing **112** and the second bearing are used to support the first end **108A** and the second end **108B** from a radial load, axial loads and bending stresses during the operation.

The cooling arrangement **100** further comprises a fluid guiding assembly **116** arranged within the intermediate hollow body **108C.** The fluid guiding assembly **116** has a central conduit **118** fluidically coupled to the first end **108A** and spaced apart from the second end **108B.** The fluid guiding assembly **116** is configured to allow the cooling medium to enter through the central conduit **118** and transfer within the hollow body **108C.** The central conduit **118** has an input end **118A** and an output end **118B,** and the central conduit **118** is configured to define an inlet path **120** to allow the cooling medium to enter inside the hollow shaft **108.** The input end **118A** and the output end **118B** are the tubular structure through which the cooling medium enters and exits, respectively, into the cooling arrangement **100.** It will be appreciated that the input end **118A** and the output end **118B** may have an appropriate size or diameter to receive a continuous flow of the cooling medium in the cooling arrangement **100.** Optionally, the input end **118A** and the output end **118B** may have the same or different diameters. The inlet path **120** is configured to receive the cooling medium within the central conduit **118.** Optionally, the input end **118A** is fluidically coupled to the inlet member **110.**

Optionally, a space between the central conduit **118** and the intermediate hollow body **108C** of the hollow shaft **108** is configured to define an outlet path **122** to allow the cooling medium to exit from the hollow shaft **108.** Suitably, the space between the central conduit **118** and the intermediate hollow body **108C** of the hollow shaft **108** refers to a radial dimension. The space between the central conduit **118** and the intermediate hollow body **108C** is operable to flow the cooling medium from the central conduit **118** to the outlet path **122.**

Optionally, the fluid guiding assembly further comprises at least one radial support unit **124, 126** arranged on the central conduit **118** and supported by the intermediate hollow body **108C** of the hollow shaft **108.** The at least one radial support unit is arranged to support the central conduit **118.** Suitably, the at least one radial support unit guides the cooling medium by the centrifugal effect of rotation from the inlet path **120** to the outlet path **122.** Optionally, the at least one radial support unit is operable to propel the cooling medium along the outlet path **122** defined by the space between the central conduit **118** and the intermediate hollow **108C** body of the hollow shaft **108.** In this regard, the at least one radial support unit is configured to propel the cooling medium backwards to the outlet path **122** between the central conduit **118** and the intermediate hollow body **108C.**

Optionally, the at least one radial support unit comprises a first radial support unit **124** having a first plurality of blades **124A.** Optionally, the first radial support unit **124** is arranged on the central conduit **118** and in proximity to the first end **108A.** Optionally, a second radial support unit **126** has a second plurality of blades **126A.** Optionally, the second radial support unit **126** is arranged on the central conduit **118** and in proximity to the second end **108B.** Optionally, the at least one radial support unit comprises a plurality of first support rims **128** surrounding the first plurality of blades **124A** and the second plurality of blades **126A,** the plurality of first support rims **128** being mounted on the intermediate hollow body **108C.**

Optionally, the cooling arrangement **100** further comprises a seal member **130** mounted on the second end **108B** of the hollow shaft **108** to seal the second end **108B.** The seal member **130** is used to seal the second end **108B** to prevent the leakage of the cooling medium. It will be appreciated that the seal member **130** is arranged circumferentially on or in the hollow shaft **108.** Optionally, the seal member **130** may be a radial seal, lip seal, rotary seal, a plug and the like. Optionally, the seal member **130** is fabricated from a material selected from at least one of a rubber, a plastic, a silicone, a composite material.

Optionally, the intermediate hollow body **108C** comprises a central tubular portion **132** and a first conical portion **134** extending from the central tubular portion **132** to the second end **108B.** It will be appreciated the central tubular portion **132** is configured to provide the housing to the central conduit **118,** at least one radial support unit, inlet path **120** and the outlet path **122.** Suitably, the first conical portion **134** extends from the central tubular portion **132** to the second end **108B.** and configured to receive the cooling medium from the central conduit **118** before transferring to the outlet path **122.** The first conical portion **134** can help to guide the cooling medium, that is exiting the central conduit 118 at the output end 118B and is accelerated via a centrifugal force, towards the outlet path **122.** In other words, the conical shape of the first conical portion **134** can deflect the cooling medium into the desired direction an improve the flow of cooling medium. Optionally, the intermediate hollow body **108C** further comprises a second conical portion **136** extending from the central tubular portion **132** to the first end **108A.** Suitably, the second conical portion **136** extends from the central tubular portion **132** to the first end **108A** and configured to receive the cooling medium from the outlet path **122** and back to the reservoir (not shown).

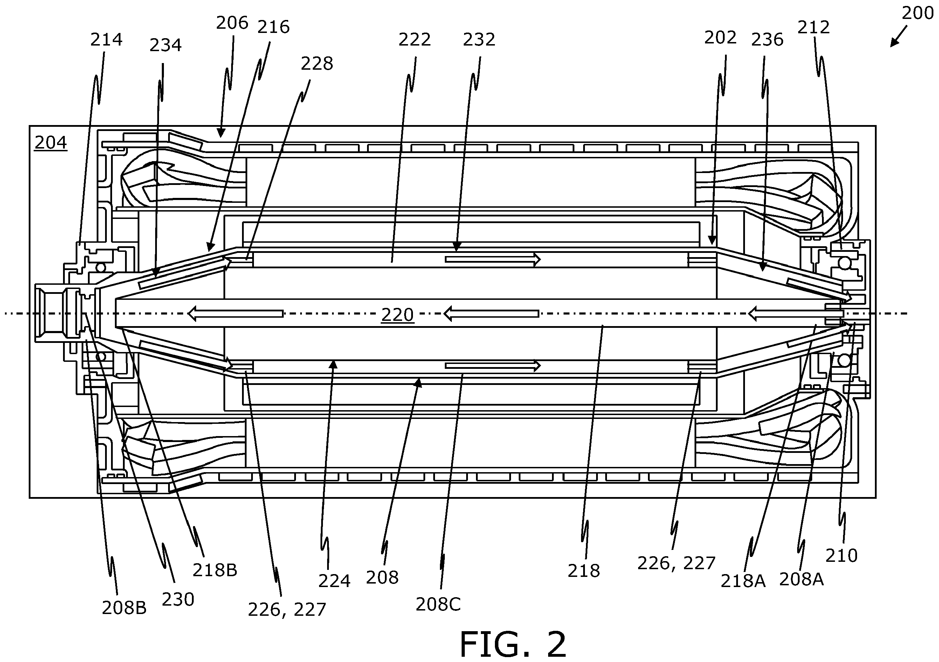

FIG. 2 is a cross-sectional view of a cooling arrangement 200 for a rotor **202** of an electrical machine **204,** in accordance with a second embodiment of the present disclosure. As shown, the cooling arrangement **200** is configured to reduce the heat produced within the rotor **202.** The rotor **202** is housed within a stator **206** and is configured to rotate within the stator **206** to create torque. The rotor **202** has a hollow shaft **208** having a first end **208A,** a second end **208B** opposite to the first end **208A,** and an intermediate hollow body **208C** between the first end **208A** and the second end **208B** similar to FIG. 1. As shown, the first end **208A** and the second end **208B** is configured to support the hollow shaft **208** to provide rigidity to the cooling arrangement **200.** Optionally, the cooling arrangement **200** further comprises an inlet member **210** mounted on the first end **208A** of the hollow shaft **208.** The inlet member **210** is configured to transfer a cooling medium from the reservoir (not shown) to the rotor **202.** It will be appreciated that the inlet member **210** may have a circular cross-section. Optionally, the cross-section of the inlet member 108 may be a rectangular, triangular or any polygonal shape.

Optionally, the first end **208A** of the hollow shaft **208** is rotatably supported by a first bearing **212** and the inlet member **210** is arranged in the first bearing **212.** Optionally, the second end **208B** of the hollow shaft **208** is rotatably supported by a second bearing **214.** Moreover, the first bearing **212** and the second bearing **214,** are configured to facilitate motion and also support the rotation of the hollow shaft **208.** For instance, the first bearing **212** and the second bearing **214** may be a sliding bearing. In another instance, the first bearing **212** and the second bearing **214** may be a rolling bearing. In this regard, the first bearing **212** and the second bearing are used to support the first end **208A** and the second end **208B** from a radial load, axial loads and bending stresses during the operation.

The cooling arrangement **200** further comprises a fluid guiding assembly **216** arranged within the intermediate hollow body **208C.** The fluid guiding assembly **216** has a central conduit **218** fluidically coupled to the first end **208A** and spaced apart from the second end **208B.** The fluid guiding assembly **216** is configured to allow the cooling medium to enter through the central conduit **218** and transfer within the hollow body **208C.** The central conduit **218** has an input end **218A** and an output end **218B,** and the central conduit **218** is configured to define an inlet path **220** to allow the cooling medium to enter inside the hollow shaft **208.** The input end **218A** and the output end **218B** are the tubular structure through which the cooling medium enters and exits, respectively, into the cooling arrangement **200.** It will be appreciated that the input end **218A** and the output end **218B** may have an appropriate size or diameter to receive a continuous flow of the cooling medium in the cooling arrangement **200.** Optionally, the input end **218A** and the output end **218B** may have the same or different diameters. The inlet path **220** is configured to receive the cooling medium within the central conduit **218.**

Optionally, a space between the central conduit **218** and the intermediate hollow body **208C** of the hollow shaft **208** is configured to define an outlet path **222** to allow the cooling medium to exit from the hollow shaft **208.** Suitably, the space between the central conduit **218** and the intermediate hollow body **208C** of the hollow shaft **208** refers to a radial dimension. The space between the central conduit **218** and the intermediate hollow body **208C** is operable to flow the cooling medium from the central conduit **218** to the outlet path **222.**

Optionally, the fluid guiding assembly **216** further comprises a flow guiding cover **224** enclosing the central conduit **218.** In the embodiment shown, the annular space between the flow guiding cover **224** and the hollow shaft **208,** inside the hollow shaft **208,** defines the outlet path **222.** The flow guiding cover **224** is a rotationally symmetric container or case which is constituted inside the hollow shaft **208.** The flow guiding cover **224** effectively reduces the volume inside hollow shaft **208** which is available to the cooling medium. One function of the flow guiding cover **224** is to reduce an effective flow cross section for the cooling medium inside the hollow shaft **208.** By reducing the effective flow cross section, the velocity of the cooling medium in an axial flow direction, i.e. parallel to the axis of rotation, can be increased and/or turbulences can be reduced.

Optionally, the flow guiding cover **224** contains an inert gas therein. Notably, the inert gas is a non-reactive gas and is also configured to avoid undesired reactions such as oxidation, reduction, hydrolysis and the like which may corrode the rotor and damage the windings. Suitably, the inert gases can be used as the cooling medium to dissipate heat from the cooling arrangement **200.** The inert gases may be selected but not limited to helium gas, hydrogen gas, argon gas or nitrogen gas. The inert gas absorbs the heat generated from the rotor and transfer to the cooling medium. Also, the cooling medium then absorbs the heat dissipated from the inert gas. Optionally, the inert gas may be self-circulating within the cooling arrangement to cool the rotor **202** of the electrical machine **204.** For example, if a rotor has a speed of 3000 rpm, as a result, it has a high temperature, in order to reduce the temperature inert gas may be used as a cooling medium.

Optionally, the flow guiding cover **224** is configured to conform to a shape of the intermediate hollow body **208C.** In this regard, the shape of the flow guiding cover **224** is similar or equal to the shape of the hollow body **208,** but smaller. The similar shape of the cover helps in providing a uniform effective flow cross section of the outlet path **222** inside the hollow body **208.** The uniform thickness of the inert gas around the hollow body helps to uniformly distribute the heat dissipated by the cooling arrangement **200.**

Optionally, the hollow body further comprises a plurality of two radial support units **226** surrounding the flow guiding cover **224** and mounted on the intermediate hollow body **208C** of the hollow shaft **208.** The radial support units **226** each comprise a circumferential rim **227,** which is configured to support the cooling arrangement **200** by holding the flow guiding cover **224** from the first end **208A** and the second end **208B** of the hollow shaft **208.** The radial support units **226** are arranged to minimize the bending stress on the rotor. Notably, the bending stress is a normal stress which acts when the rotor is in operation. During operation, the rotor experiences the bending along its length due to stress induced in the fluid guiding assembly **216.** Moreover, the radial support units **226** are configured to withhold the weight of hollow shaft **208** and also provide controlled flow of the cooling medium through the liquid cooling assembly **216,** in particular in an axial flow direction.

Optionally, each of the plurality of radial support units **226,** in particular each circumferential rim **227,** comprises one or more through openings **228** configured to allow the cooling medium to flow therethrough and along the outlet path **222** to exit the hollow shaft **206.** Herein, the opening **228** may be a gap, a hole, a space, a perforation, a vent and the like arranged on the radial support units **226.** The through openings **228** arranged on the radial support units **226** enable the flow of the cooling medium to flow within the fluid guiding assembly **216.** It will be appreciated that the rate of flow of the cooling medium may be controlled accordingly by increasing or decreasing the shape and size of the one or more through openings **228.** In addition, the through opening **228** control the pressure of the cooling medium in outlet path **222.** Moreover, the cooling medium is passed through the fluid guiding assembly **216** in the central conduit **218** during operation, the cooling medium absorbs heat dissipated from the rotor **202** and is further passed to the radial support units **226** from where the cooling medium passed from the through opening **228** to flow from the outlet path **222.** In alternative embodiments, a radial support unit 124, 126 can be used, e.g. with a plurality of blades 124A, 124B, or with a plurality of radial protrusions (not shown here), that connect the flow guiding cover **224** to the hollow shaft **208.**

Optionally, the cooling arrangement **200** further comprises a seal member **230** mounted on the second end **208B** of the hollow shaft **208** to seal the second end **208B.** The seal member **230** is used to seal the second end **208B** to prevent the leakage of the cooling medium. It will be appreciated that the seal member **230** is arranged circumferentially on the hollow shaft **208.** Optionally, the seal member **230** may be a radial seal, lip seal, rotary seal and the like. Optionally, the seal member **230** is fabricated from a material selected from at least one of a rubber, a plastic, a silicone, a composite material. Seal members **130, 230** may be a contact seal. In other embodiments, in particular where a liquid cooling medium such as oil is used, seal members **130, 230** may be a non-contact seal.

Optionally, the intermediate hollow body **208C** comprises a central tubular portion **232** and a first conical portion **234** extending from the central tubular portion **232** to the second end **208B.** It will be appreciated the central tubular portion **232** is configured to provide the housing to the central conduit **218,** at least one radial support unit, inlet path **220** and the outlet path **222.** Suitably, the first conical portion **234** extends from the central tubular portion **232** to the second end **208B** and configured to receive the cooling medium from the central conduit **218** before transferring to the outlet path **222.** Optionally, the intermediate hollow body **208C** further comprises a second conical portion **236** extending from the central tubular portion **232** to the first end **208A.** Suitably, the second conical portion **236** extends from the central tubular portion **232** to the first end **208A.** and configured to receive the cooling medium from the outlet path **222** and back to the reservoir (not shown).

In the embodiments shown, in particular the second embodiment, the inlet member 210 of the cooling arrangement 200 can be connected to a pressure source such as a pump, a compressor or a pressure tank, wherein the pressure source is configured to supply the cooling medium with a pressure sufficient to establish a flow of the cooling medium from the inlet member 210 to the outlet path 222. This is in particular advantageous for embodiments where the radial support unit does not comprise blades or the like cooling medium propelling means. For such purposes, the cooling arrangement can comprise a pressure source.

Modifications to embodiments of the present disclosure described in the foregoing are possible without departing from the scope of the present disclosure as defined by the accompanying claims. For example, an embodiment of the invention can comprise a cooling arrangement with one or more radial support units according to the first embodiment, combined with a flow guiding cover according to the second embodiment. Also the effects and advantages for a feature described in the first embodiment apply analogously to an identical or similar feature of the second embodiment. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A cooling arrangement (100,200) for a rotor (102, 202) of an electrical machine (104, 204), the cooling arrangement comprising:
- a hollow shaft (108, 208) having a first end (108A, 208A), a second end (108B, 208B) opposite to the first end, and an intermediate hollow body (108C, 208C) between the first end and the second end; and
- a fluid guiding assembly (116, 216) arranged within the intermediate hollow body, the fluid guiding assembly having a central conduit (118, 218) fluidically coupled to the first end and spaced apart from the second end.

2. The cooling arrangement (100,200) according to claim 1, wherein the central conduit (118, 218) has an input end (118A, 218A) and an output end (118B, 218B), and wherein the central conduit is configured to define an inlet path (120, 220) to allow a cooling medium to enter inside the hollow shaft (108, 208).

3. The cooling arrangement (100,200) according to claim 1 or 2, wherein a space between the central conduit (118, 218) and the intermediate hollow body (108C, 208C) of the hollow shaft (108, 208) is configured to define an outlet path (122, 222) to allow the cooling medium to exit from the hollow shaft.

4. The cooling arrangement (100,200) according one of the preceding claims, wherein the fluid guiding assembly (116, 216) further comprises at least one radial support unit (124, 126) arranged on the central conduit (118, 218) and supported by the intermediate hollow body (108C, 208C) of the hollow shaft (108, 208).

5. The cooling arrangement (100,200) according to claim 4, wherein the at least one radial support unit (124, 126) is operable to propel a cooling medium along an outlet path (122, 222) defined by a space between the central conduit (118, 218) and intermediate hollow body (108C, 208C) of the hollow shaft (108, 208).

6. The cooling arrangement (100,200) according to claim 4 or 5, wherein the at least one radial support unit (124, 126) comprises:
- a first radial support unit (124) having a first plurality of blades (124A), wherein the first radial support unit is arranged on the central conduit (118, 218) and in proximity to the first end (108A, 208A); and
- a second radial support unit (126) having a second plurality of blades (126B), wherein the second radial support unit is arranged on the central conduit and in proximity to the second end (108B, 208B).

7. The cooling arrangement (100,200) according to claim 4, wherein the at least one radial support unit (124, 126) comprises a circumferential rim (227), being mounted on the intermediate hollow body (108C, 208C).

8. The cooling arrangement (100,200) according to one of the preceding claims, wherein the fluid guiding assembly (116, 216) further comprises a flow guiding cover (224) enclosing the central conduit (118, 218).

9. The cooling arrangement (100,200) according to claim 8, wherein the flow guiding cover (224) is hollow and/or is configured to conform to a shape of the intermediate hollow body (108C, 208C).

10. The cooling arrangement (100,200) according to one of the preceding claims, further comprising an inlet member (110, 210) mounted on the first end (108A, 208A) of the hollow shaft (108, 208) and fluidically coupled to an input end (118A, 218A) of the central conduit (118, 218).

11. The cooling arrangement (100,200) according to claim 10, wherein the first end (108A, 208A) of the hollow shaft (108, 208) is rotatably supported by a first bearing (112, 212) and the inlet member (110, 210) is arranged in the first bearing.

12. The cooling arrangement (100,200) according to one of the preceding claims, further comprising a seal member (130, 230) mounted on the second end (108B, 208B) of the hollow shaft (108, 208) to seal the second end.

13. The cooling arrangement (100,200) according to one of the preceding claims, wherein the second end (108B, 208B) of the hollow shaft (108, 208) is rotatably supported by a second bearing (114, 214).

14. The cooling arrangement (100,200) according to one of the preceding claims, wherein the intermediate hollow body (108C, 208C) comprises:
- a central tubular portion (132, 232); and
- a first conical portion (134, 234) extending from the central tubular portion to the second end (108B, 208B).

15. The cooling arrangement (100,200) according to claim 14, wherein the intermediate hollow body (108C, 208C) further comprises a second conical portion (136, 236) extending from the central tubular (132, 232) portion to the first end (108A, 208A).
